# FASCICULE DE BREVET EUROPEEN

(11) **EP 3 921 958 B1**
(45) Date de publication et mention de la délivrance du brevet: **21.10.2026**
(21) Numéro de dépôt: 20707721.5
(22) Date de dépôt: 03.02.2020
(51) Int. Cl.: H04B 7/26, H04W 28/06, H04W 74/08, H04W 16/14, H04W 76/16, H04W 88/06, H04L 5/00

(54) **PROCÉDÉ D'ÉMISSION À DEUX PROTOCOLES, PROCÉDÉ DE RÉCEPTION ET DISPOSITIFS ET SIGNAL CORRESPONDANTS**
ÜBERTRAGUNGSVERFAHREN MIT ZWEI PROTOKOLLEN, EMPFANGSVERFAHREN UND ENTSPRECHENDE VORRICHTUNGEN UND SIGNAL
TWO-PROTOCOL TRANSMISSION METHOD, RECEPTION METHOD AND CORRESPONDING DEVICES AND SIGNAL

(30) Priorité: 05.02.2019 FR 1901103
(43) Date de publication de la demande: 15.12.2021
(73) Titulaire: Orange, 92130 Issy-les-Moulineaux (FR)
(72) Inventeur: LIN, Hao, 92326 CHÂTILLON CEDEX (FR); REDIETEAB, Getachew, 92326 CHÂTILLON CEDEX (FR)
(74) Mandataire: Tarquis-Guillou, Anne
(86) Numéro de dépôt international: PCT/FR2020/050169
(87) Numéro de publication internationale: WO 2020/161419

(56) Documents cités:
- INTEL CORPORATION: "Enhancements to NR DL signals and channels for unlicensed operation", vol. RAN WG1, no. Chengdu, China; 20181008 - 20181012, 29 September 2018 (2018-09-29), XP051518169, Retrieved from the Internet <URL:http://www.3gpp.org/ftp/tsg%5Fran/WG1%5FRL1/TSGR1%5F94b/Docs/R1%2D1810764%2Ezip> [retrieved on 20180929]
- INTEL CORPORATION: "Initial design on technology neutral preamble for unlicensed operation", vol. RAN WG1, no. Gothenburg, Sweden; 20180820 - 20180824, 11 August 2018 (2018-08-11), XP051516065, Retrieved from the Internet <URL:http://www.3gpp.org/ftp/tsg%5Fran/WG1%5FRL1/TSGR1%5F94/Docs/R1%2D1808690%2Ezip> [retrieved on 20180811]

## Description

### Domaine de l'invention

La présente invention se rapporte au domaine des télécommunications. Au sein de ce domaine, l'invention se rapporte plus particulièrement aux procédés d'émission et de réception pour permettre une coexistence dans une même bande de fréquence entre des équipements communicants via un réseau d'accès mobile et des équipements mettant en œuvre des transmissions sans fil. Elle s'applique notamment aux dispositifs portables de télécommunication.

### Art antérieur

Le support de transmission des communications est couramment appelé canal de transmission ou de propagation, à l'origine en référence à un canal aérien et par extension en référence à tout canal. Les systèmes sans fil ont une interface dite de transmission RF lorsqu'il s'agit d'un système de télécommunication avec une transmission aérienne d'un signal appartenant à une bande radio (par exemple, de type GSM, UMTS, IEEE 802.11x, IEEE 802.16e). Parmi ces systèmes on distingue les systèmes d'accès cellulaires dits encore mobiles spécifiés plus particulièrement par le 3GPP, des systèmes non mobiles qui comprennent essentiellement ceux basés sur une norme WiFi.

Les systèmes de télécommunication sont généralement structurés selon une architecture qui répond à une organisation en couches selon le modèle de communication OSI, normalisé par l'ISO (International Organization for Standardization selon la terminologie anglosaxonne).

Le modèle de communication OSI définit la gestion de service de transmission de données au moyen de sept couches protocolaires superposées : la couche physique (couche 1), la couche liaison de données (couche 2), la couche réseau (couche 3), la couche transport (couche 4), la couche session (couche 5), la couche présentation (couche 6) et la couche application (couche 7).

Les trois premières couches 1, 2 et 3, dites couches basses, sont relatives à la mise en œuvre de la connexion et au transport des données. Les quatre couches suivantes, dites couches hautes, sont responsables du traitement des données. Cette organisation permet donc au système de télécommunication d'implémenter le service associé aux données traitées.

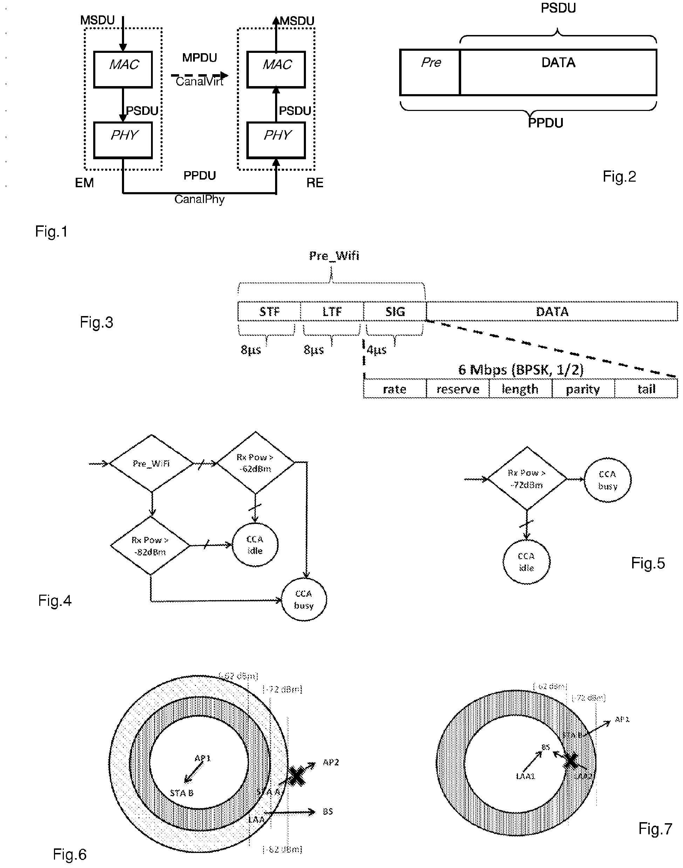

La figure 1 est un schéma de principe de l'échange virtuel de trames entre les couches physiques PHY et MAC d'un émetteur EM et d'un récepteur RE. Le schéma représente un exemple d'encapsulation des données SDU (Service Data Unit) dans les PDUs (Protocol Data Unit) pour les couches PHY et MAC, ({PSDU et PPDU} pour la couche PHY, {MSDU et MPDU} pour la couche MAC).

Les systèmes dits WiFi s'appuient sur une des normes IEEE 802.11. La norme IEEE 802.11a est la première de ces normes qui spécifie une couche physique basée sur une modulation dite OFDM (Orthogonal Frequency Division Multiplex) avec une transmission radio dans la bande 5GHz. La modulation OFDM utilise une transformée de Fourier inverse dite IFFT (Inverse Fast Fourier Transform) de 64 points sur une bande de 20MHz soit un espacement entre sous porteuses de 312,5kHz pour générer des symboles de durée 3,2µs. L'ajout d'un préfix cyclique de durée 0,8 µs conduit à des symboles OFDM de durée 4 µs.

Les transmissions WiFi étant asynchrones avec un accès au canal de type par exemple CSMA (Carrier Sense Multiple Access), les trames PPDU transmises doivent comprendre un préambule Pre, en référence à la figure 2, pour que le récepteur puisse détecter l'arrivée de la trame transmise, puisse se synchroniser, puisse extraire la signalisation qui comprend le mode de codage et puisse décoder les données.

En référence à la figure 3, le préambule Pre_WiFi selon la norme IEEE 802.11a comprend trois champs : STF, LTF et SIG.

Le champ STF (Short Training Field) de durée 8 µs comprend dix répétitions d'un symbole de durée 0,8 µs et sert à :
- détecter le début d'une trame en utilisant les bonnes propriétés de corrélation d'une séquence de base,
- un contrôle automatique de gain,
- une estimation initiale d'un décalage fréquentiel et
- une synchronisation temporelle initiale.

Le champ LTF (Long Training Field) comprend deux symboles d'apprentissage de durée 3,2 µs précédés d'un préfix cyclique de durée 1,6 µs et sert à :
- une estimation du canal de transmission,
- une estimation fine du décalage fréquentiel et
- une synchronisation temporelle fine.

Le champ SIG (Signal field) comprend vingt-quatre bits d'information transmis en utilisant une modulation BPSK (Binary Phase Shift Keying) et un code convolutif binaire (BCC Binary Convolution Code) de rendement ½ avec :
- 4 bits d'information rate sur le débit (modulation et rendement de code) utilisé pour le champ DATA de données,
- un bit réservé reserve positionné à zéro,
- 12 bits d'information length sur la longueur en bytes du champ DATA de données, qui couplée à l'information de débit permet de déterminer la durée temporelle restante de la trame (i.e. la durée du champ DATA),
- un bit de parité parity calculé sur les dix-sept bits précédents et
- six bits de fin tail utilisé pour vider le codeur et le décodeur et permettre de décoder le champ SIG séparément du champ DATA.

Le préambule spécifié par la norme IEEE 802.11a a été repris par la norme IEEE 802.11n pour le format de mode mixte (mixed-mode format) et par les normes IEEE 802.11ac et IEEE 802.11ax pour assurer une compatibilité descendante (backward compatibility). Donc toutes les trames PPDU transmises par un équipement WiFi en particulier dans la bande 5GHz doivent débuter avec un préambule de type IEEE 802.11a à l'exception du format optionnel dit « greenfield » de la norme IEEE802.11n.

Compte tenu de l'accès aléatoire au canal, la couche physique doit écouter le canal pour déterminer son état : occupé (Busy) ou libre (Idle) et en informer la couche MAC. La fonction CS (Carrier Sense) du mécanisme CCA (Clear Channel Assessment) est utilisée à cette fin.

Ainsi, la couche physique PHY mesure le niveau d'énergie reçue sur une fenêtre de 4 µs et le compare à un seuil. Pour une largeur de bande de 20MHz, la norme définit deux seuils : -82dBm et -62dBm. Une transmission reçue est reconnue comme une transmission OFDM valide si le niveau d'énergie reçue est supérieur ou égal au seuil de -82dBm et si le préambule détecté est valide i.e. conforme à la norme IEEE 802.11a. Une transmission reçue est reconnue comme une transmission d'un autre type si le niveau d'énergie reçue est supérieur ou égal au seuil de -62dBm. Le premier seuil est communément appelé PD (Preamble Detect) et le second ED (Energy Detect).

La machine d'état CCA correspondante est illustrée par la figure 4. Pour détecter une transmission WiFi avec un préambule IEEE 802.11a, le récepteur met constamment en œuvre une corrélation (soit sous la forme d'une autocorrélation ou d'une inter-corrélation (cross-correlation) en fonction du mode de la mise en œuvre) sur les symboles du champ STF. La détection d'un préambule IEEE 802.11a doit intervenir avant la fin des 4 µs d'une fenêtre i.e. égale à la moitié du champ STF pour que le récepteur utilise le premier seuil PD (-82dBm) pour statuer sur l'état CCA du canal. En outre, la validité du champ SIG (déterminée lors du décodage de ce champ SIG) du préambule Pre_WiFi conditionne le choix final du seuil. Un champ SIG non valide conduit à un changement au seuil le plus haut, -62dBm, même si ce seuil avait été positionné à -82dBm suite à la détection du champ STF. Et dans ce cas, si l'énergie reçue dépasse le seuil Rx Pow>-62dBm, le canal est considéré occupé CCA busy, si l'énergie reçue est en-dessous du seuil, le canal est considéré libre CCA idle. Un champ SIG valide confirme le choix du seuil le plus bas -82dBm. Dans ce cas, si l'énergie reçue dépasse le seuil Rx Pow>-82dBm, le canal est considéré occupé CCA busy, si l'énergie reçue est en-dessous du seuil, le canal est considéré libre CCA idle.

La couche MAC met en œuvre le mécanisme d'accès au canal basé sur la fonction DCF (Distributed Coordination Function) en prenant en compte l'état CS/CCA fourni par la couche physique. La couche MAC peut en outre utiliser un mécanisme d'accès distribué au canal, EDCA (Enhanced Distributed Channel Access), pour obtenir une qualité de service, QoS (Quality of Service), basée sur une priorisation. Ces mécanismes s'apparentent au mécanisme LBT (Listen Before Talk). Ainsi, lorsqu'un dispositif a quelque chose à transmettre il suit la règle de base d'un mécanisme LBT qui est de différer sa transmission tant que le canal qu'il écoute est occupé et d'attendre une durée aléatoire dès qu'il a détecté que le canal est libre pour éviter les collisions.

Dans le cadre des travaux menés au sein du 3GPP et qui ont conduit à la version 13 de la norme LTE, le mécanisme d'accès LAA (License Assisted Access) a été introduit et spécifié dans la bande radio non licenciée 5GHz commune à celle utilisée par des équipements WiFi. Ce mécanisme utilise le mécanisme LBT et notamment un mode dit de catégorie 4 (cat4 scheme) basé sur la procédure EDCA du WiFi qui permet d'améliorer la coexistence avec d'autres communications et plus particulièrement avec celles intervenant dans la bande licenciée du LTE. La machine d'état CCA correspondante du mécanisme LAA est illustrée par la figure 5. Cette machine d'état est différente de celle d'un équipement WiFi illustrée par la figure 4. En effet, pour le mécanisme LAA il n'y a qu'un seuil appelé ED configuré à -72dBm. Ainsi, le résultat de la comparaison de l'énergie reçue à ce seuil Rx Pow>-72dBm permet de conclure à un canal occupé CCA busy ou à un canal libre CCA idle.

Cette différence entre les machines d'état du WiFi et du LTE LAA peut conduire à une injustice dans l'accès au canal : un même signal reçu peut conduire à un état CCA occupé pour la technologie LAA, respectivement WiFi, alors qu'il apparaît libre pour la technologie WiFi, respectivement LAA. Il y a ainsi des problèmes de coexistence entre les technologies dans certains cas de figure. Dans ces cas une des technologies bénéficie d'une priorité supérieure par rapport à l'autre technologie et les transmissions selon cette autre technologie ne seront pas protégées. Ces cas sont illustrés par les figures 6 et 7.

La figure 6 illustre un accès injuste au canal d'un terminal selon la technologie LAA dans un contexte de transmission WiFi en cours.

Selon le contexte de transmission WiFi en cours, un point d'accès AP1 émet un signal WiFi à destination d'une station STA B. Pendant cette transmission WiFi, le seuil -82dBm relatif à la machine d'état CCA d'un équipement WiFi est représenté par un cercle centré sur le point d'accès AP1 qui est l'émetteur de cette transmission WiFi. La station STA A située à l'intérieur du cercle de -82dBm qui voudrait émettre un signal WiFi à destination d'un point d'accès AP2 détecte et décode un préambule WiFi. Tant que l'AP1 émet un signal WiFi, cette station STA A positionne le seuil CCA à -82dBm et ne peut pas accéder au canal puisque le niveau d'énergie qu'elle reçoit est supérieur à ce seuil ; pour elle le canal est occupé (CCA busy). Alors qu'un dispositif LAA situé à l'intérieur du cercle de -82dBm mais à l'extérieur d'un cercle de -72dBm détecte un niveau d'énergie inférieur au seuil CCA -72dBm ; pour lui le canal est libre. Ce dispositif LAA peut prendre le canal pour émettre vers une station de base BS.

La figure 7 illustre un accès injuste au canal d'un terminal WiFi dans un contexte de transmission LAA en cours.

Selon le contexte de transmission LAA en cours, un premier dispositif LAA1 émet un signal vers une station de base BS. Un deuxième dispositif LAA2 situé à l'intérieur d'un cercle de -72dBm centré sur le premier dispositif LAA1 détecte une énergie supérieure au seuil CCA -72dBm ; pour lui le canal est occupé. Ce deuxième dispositif LAA2 ne peut pas par conséquent accéder au canal tant que le premier dispositif LAA1 émet. Par contre, une station STA B WiFi située à l'intérieur du cercle -72dBm mais à l'extérieur d'un cercle -62dBm centrés sur le premier dispositif LAA1 ne détecte pas de préambule WiFi et positionne son seuil CCA à -62dBm. Cette station STA B détecte un niveau d'énergie inférieur au seuil CCA -62dBm ; pour elle le canal est libre. Cette station STA B peut prendre le canal pour émettre vers un point d'accès AP1.

Le document d'Intel « Enhancements to NR DL signals and channels for unlicensed operation", R1-1810764, (2018-09-29), XP 051518169, 3GPP TSG RAN WG1 Meeting #94bis évoque l'utilisation d'un préambule « neutral » basé sur le préambule IEEE 802.11a dans un NR-U.

Le document d'Intel, "Initial design on technology neutral preamble for unlicensed operation", R1-1808690, (2018-08-11), XP 051516065 évoque un préambule « neutral » comprenant les champs L-STF, L-LTF et L-SIG, ce dernier comprenant le champ LENGTH dont la longueur est suggérée devant être divisible par trois.

Il existe donc un besoin pour une technique permettant d'assurer un accès au canal plus juste lors d'une coexistence entre une technologie WiFi et un réseau d'accès mobile, par exemple de type LTE, dans une bande commune, par exemple la bande 5GHz non licenciée.

### Exposé de l'invention

L'invention propose un procédé d'émission de données par un équipement vers une station de base d'un réseau d'accès mobile conforme à un premier protocole, le procédé étant tel que décrit dans la revendication 1.

L'invention a en outre pour objet un terminal mobile conforme à un premier protocole et apte à émettre dans une bande de fréquence partagée avec un réseau conforme à un deuxième protocole, le terminal étant tel que décrit dans la revendication 9.

L'invention a en outre pour objet un procédé de réception de trames de données par un équipement conforme à un premier protocole, le procédé étant tel que décrit dans la revendication 6.

L'invention a en outre pour objet un terminal mobile conforme à un premier protocole et apte à recevoir des trames dans une bande de fréquence partagée avec un réseau conforme à un deuxième protocole, le terminal étant décrit dans la revendication 10.

L'invention a en outre pour objet un signal numérique émis ou reçu contenant une trame comprenant un nouveau préambule et des données codées conformément à un premier protocole, le signal étant décrit dans la revendication 12.

Le préambule conforme au deuxième protocole permet à tout équipement conforme à ce protocole de détecter ce préambule. En outre, cet équipement est capable de décoder ce préambule, il interprète par conséquent la transmission d'une trame selon l'invention comme étant conforme au deuxième protocole et il en conclut que le canal est occupé. Donc, cet équipement ne peut pas accéder au canal tant qu'un premier équipement conforme au premier protocole transmet des données en suivant un procédé selon l'invention.

Le champ préambule conforme au premier protocole permet à tout équipement conforme à ce protocole de détecter ce préambule et d'obtenir des informations contenues dans ce champ pour décoder les données du champ de données.

Ainsi, dans le cas d'un deuxième protocole conforme à une norme WiFi, tout équipement WiFi peut détecter toute transmission de données codées selon le premier protocole conforme à une norme mobile utilisant la même bande de fréquence par exemple 5GHz si cette transmission intervient selon un procédé selon l'invention. Cet équipement WiFi maintient par conséquent son seuil CCA de -82dBm puisqu'il décode correctement le préambule conforme à ce deuxième protocole.

Et tout équipement WiFi considère le canal comme occupé dès qu'une émission selon l'invention intervient et en particulier lorsque cette émission transmet des données codées selon un protocole conforme à une norme mobile.

Selon un mode de réalisation particulier de l'invention, le préambule conforme au deuxième protocole comprend un premier champ, un deuxième champ et un troisième champ de contenu déterminé, le premier champ permettant d'effectuer une détection du préambule, une synchronisation grossière en fréquence et une synchronisation grossière en temps, le deuxième champ permettant d'effectuer une synchronisation fine en fréquence et une synchronisation fine en temps.

Selon ce mode, le deuxième protocole est totalement compatible d'une norme WiFi. Ce mode est ainsi particulièrement adapté à une coexistence entre des équipements WiFi et des équipements 5G.

Selon un mode de réalisation particulier de l'invention, le contenu du troisième champ est déterminé par sélection d'un champ à contenu fixe parmi plusieurs champs d'une table adressée par un nombre en correspondance avec une durée temporelle de la trame émise.

Selon un mode de réalisation particulier de l'invention, le préambule et le champ préambule sont générés avec une même cadence d'horloge.

Selon un mode de réalisation particulier de l'invention, le préambule et le champ préambule sont générés avec des cadences d'horloge différentes.

Selon un mode de réalisation particulier, le procédé de réception comprend en outre :
- sur reconnaissance du préambule conforme à un deuxième protocole, positionner un seuil d'énergie reçue à une première valeur et sinon positionner le seuil à une seconde valeur supérieure à la première.

Selon un mode de réalisation particulier, le terminal apte à recevoir des trames comprend en outre :
- un processeur pour positionner un seuil d'énergie reçue à une première valeur sur reconnaissance du préambule conforme à un deuxième protocole et sinon positionner le seuil à une seconde valeur supérieure à la première.

Dans le cas d'un deuxième protocole conforme à une norme WiFi et d'un premier protocole conforme à une norme 5G, la première valeur de seuil est typiquement -82dBm et la seconde valeur -62dBm. Tout équipement NR conforme au premier protocole qui détecte une trame avec un préambule WiFi positionne son seuil à la première valeur -82dBm. Par conséquent, si cet équipement NR est situé au-delà d'un rayon de -62dBm et à l'intérieur d'un rayon de -82dBm d'un équipement WiFi qui émet, l'équipement NR considère le canal comme occupé de même qu'un équipement WiFi situé dans la même couronne. Ce mode assure ainsi un accès équitable au canal entre un équipement WiFi et un équipement NR.

### Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
[Fig 1] La figure 1, déjà commentée en relation avec l'art antérieur, est un schéma de principe de l'échange virtuel de trames entre les couches physiques PHY et MAC d'un émetteur EM et d'un récepteur RE,
[Fig 2] La figure 2 est un schéma de la structure générale d'une trame PPDU,
[Fig 3] la figure 3 est un schéma détaillant la structure du préambule d'une trame IEEE802.11a,
[Fig 4] la figure 4 est un schéma de la machine d'état CCA d'un équipement WiFi,
[Fig 5] la figure 5 est un schéma de la machine d'état CCA d'un équipement LAA,
[Fig 6] la figure 6 est un schéma des seuils mis en jeu lors d'un accès au canal d'un terminal selon la technologie LAA ou WiFi dans un contexte de transmission WiFi en cours qui illustre un accès impossible pour la station STA A et un accès possible pour l'équipement LAA,
[Fig 7] la figure 7 est un schéma des seuils mis en jeu lors d'un accès au canal d'un terminal selon la technologie WiFi ou LAA dans un contexte de transmission LAA en cours par un équipement LAA 1 qui illustre un accès impossible pour l'équipement LAA2 et un accès possible pour la station STA B,
[Fig 8] la figure 8 est un schéma de la structure d'une trame Tr_NR avec des détails sur son préambule,
[Fig 9] la figure 9 est un organigramme d'un procédé d'émission selon l'invention,
[Fig 10] la figure 10 est un organigramme d'un procédé de réception selon l'invention,
[Fig 11] la figure 11 est un schéma d'une structure simplifiée d'un équipement NR-U selon l'invention apte à mettre en œuvre un procédé de transmission selon l'invention,
[Fig 12] la figure 12 est un schéma d'une structure simplifiée d'un équipement NR-U selon l'invention apte à mettre en œuvre un procédé de réception selon l'invention
[Fig 13] la figure 13 est une table d'enregistrements comprenant chacun une indication de longueur de symboles et un champ SIG,
[Fig 14] la figure 14 est un schéma de la structure d'une trame Tr_NR avec une représentation hachurée des parties ayant le même espacement inter porteuses et ce, pour deux modes différents,
[Fig 15] la figure 15 est un schéma de la machine d'état d'un procédé de réception mis en œuvre par un équipement WiFi,
[Fig 16] la figure 16 est un schéma de la machine d'état d'un procédé de réception mis en œuvre par un équipement NR-U selon l'invention,
[Fig 17] la figure 17 est un schéma de la machine d'état d'un mode de réalisation particulier d'un procédé de réception mis en œuvre par un équipement NR-U selon l'invention.

### Description d'un mode de réalisation de l'invention

Le principe général de l'invention repose sur l'utilisation d'un préambule conforme à un deuxième protocole auquel est ajouté un champ préambule conforme à un premier protocole, différent du deuxième, tel qu'un protocole d'accès à un réseau mobile, par exemple NR (New Radio ou 5G) déployé dans une bande non licenciée commune au deuxième protocole, pour toute trame émise avec un champ de données conforme à ce premier protocole.

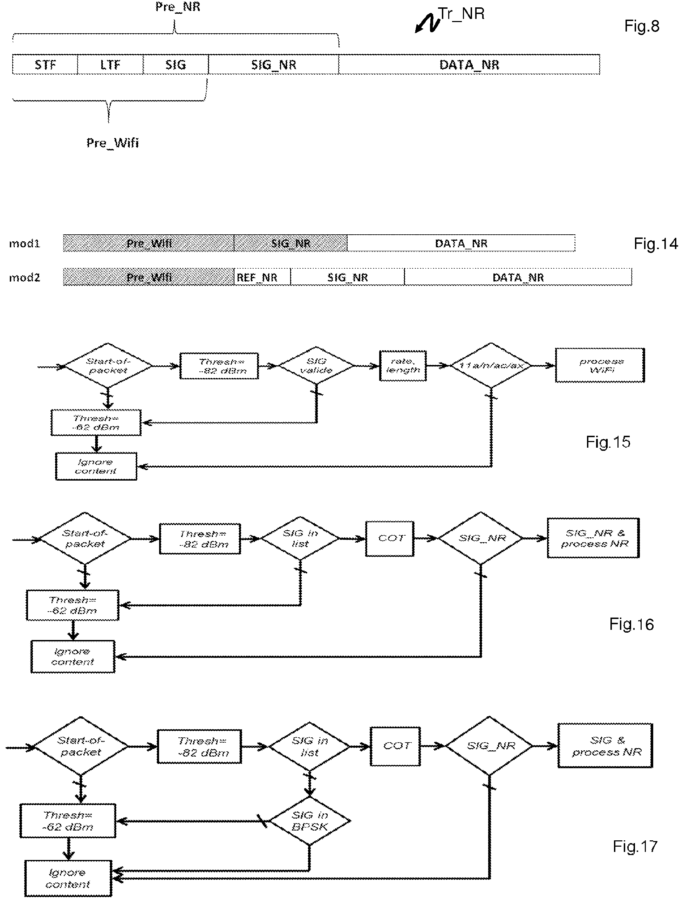

La structure de la trame Tr_NR correspondante selon l'invention est illustrée par la figure 8. La trame Tr_NR comprend un préambule Pre_NR et un champ de données DATA_NR. Le préambule Pre_NR comprend un préambule Pre_WiPi conforme au deuxième protocole et un champ préambule SIG_NR conforme au premier protocole.

Lorsqu'un équipement conforme à ce premier protocole émet une trame Tr_NR formatée selon l'invention, tout équipement conforme au deuxième protocole peut détecter le préambule Pre_WiFi conforme à ce deuxième protocole. Et, tout équipement conforme au premier protocole et à l'invention peut détecter et décoder le champ préambule SIG_NR, le champ préambule SIG_NR étant codé avant émission selon un codage canal spécifique de ce premier protocole.

Ainsi, tout équipement conforme au deuxième protocole qui reçoit suffisamment d'énergie détecte le préambule Pre_WiFi contenu dans la trame Tr_NR. Il considère alors le canal comme occupé ; il ne peut accéder au canal.

Tout équipement selon l'invention et conforme au premier protocole qui reçoit suffisamment d'énergie détecte le champ préambule SIG_NR. Il peut le décoder et déterminer que le canal est occupé.

Donc aucun des équipements conformes au deuxième protocole ne peut accéder au canal au détriment d'un équipement selon l'invention et conforme au premier protocole. La coexistence est donc améliorée.

Les données du champ de données de la trame sont codées conformément au premier protocole. Tout équipement conforme au premier protocole qui décode le champ préambule SIG_NR peut en extraire les informations de codage des données et les décoder en mettant en œuvre le décodage correspondant à ce codage.

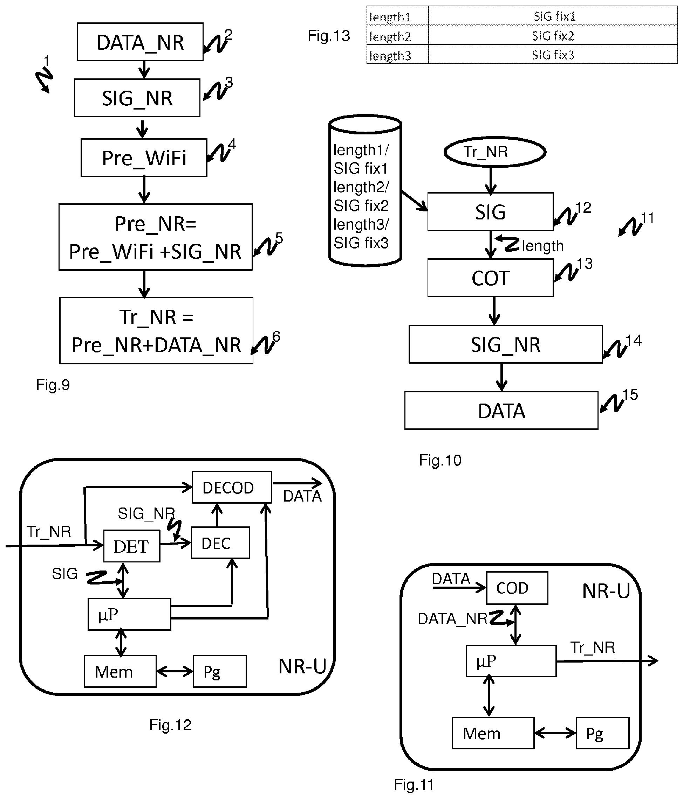

Un procédé d'émission de données selon l'invention mis en œuvre par un équipement vers une station de base d'un réseau d'accès mobile conforme au premier protocole est illustré par l'organigramme de la figure 9. L'émission intervient dans une bande de fréquence partagée avec un réseau conforme au deuxième protocole.

Le procédé 1 comprend :
- le codage 2 des données à transmettre conformément au premier protocole pour obtenir des données codées DATA_NR,
- la génération 3 d'un préambule dit champ préambule SIG_NR conforme au premier protocole,
- la génération 4 d'un préambule Pre_WiFi conforme au deuxième protocole,
- l'ajout 5 du champ préambule SIG_NR au préambule Pre_WiFi conforme au deuxième protocole pour former un nouveau préambule Pre_NR,
- l'ajout 6 du nouveau préambule Pre_NR aux données codées DATA_NR pour former une trame Tr_NR à émettre.

Le champ préambule SIG_NR permet à un récepteur conforme au premier protocole d'effectuer une détection de ce champ préambule. Le champ préambule permet en outre de transmettre des informations spécifiques à un équipement conforme au premier protocole et qui peuvent être nécessaire notamment pour décoder les données transmises.

Le préambule Pre_WiFi conforme au deuxième protocole permet à un récepteur conforme au deuxième protocole d'effectuer une détection de ce préambule Pre_WiFi et de déterminer que le canal est occupé.

Selon un mode particulier, le préambule Pre_WiFi comprend une information sur la longueur des champs qui suivent ce préambule. Cette information permet ainsi à un équipement conforme au deuxième protocole qui détecte et décode le préambule Pre_WiFi d'évaluer une durée d'occupation du canal donnée par cette information. Il considère donc que le canal est occupé pendant cette durée ce qui assure qu'il ne perturbe pas la transmission de toutes les données de la trame destinées à un équipement selon le premier protocole.

Un procédé de réception de trames de données mis en œuvre par un équipement conforme à un premier protocole est illustré par l'organigramme de la figure 10. La réception intervient dans une bande de fréquence partagée avec un réseau conforme à un deuxième protocole. La trame Tr_NR reçue comprend un nouveau préambule Pre_NR et des données codées DATA_NR conformément au premier protocole. Le nouveau préambule Pre_NR comprend un préambule Pre_WiFi conforme à un deuxième protocole et un champ préambule SIG_NR conforme au premier protocole. Le préambule Pre_WiFi comprend un champ SIG de contenu déterminé.

Le procédé de réception 11 comprend :
- la détection 12 du champ SIG de contenu déterminé par comparaison avec des champs SIG fix1, SIG fix2, SIG fix3 à contenu déterminé mémorisés dans une table, chaque champ à contenu déterminé étant mémorisé avec une information de taille lenght1, length2, length3 de données,
- l'estimation 13 d'une durée temporelle COT de la trame reçue Tr_NR correspondant à l'information de taille length de données correspondant au champ SIG détecté,
- la détection 14 et le décodage 14 du champ préambule SIG_NR pour déterminer un décodage 15 des données codées et obtenir les données décodées DATA.

Selon un mode de réalisation, la comparaison est effectuée par corrélation entre le champ SIG reçu et un champ à valeurs déterminées mémorisé dans la table.

La structure simplifiée d'un équipement selon l'invention conforme à un premier protocole et apte à mettre en œuvre un procédé d'émission selon l'invention est illustré par la figure 11.

L'équipement NR-U comprend un processeur µP dont le fonctionnement est commandé par l'exécution d'un programme Pg dont les instructions permettent la mise en œuvre d'un procédé d'émission selon l'invention, un codeur COD, une mémoire Mem comprenant une mémoire tampon.

A l'initialisation, les instructions de code du programme Pg sont par exemple chargées dans la mémoire tampon Mem avant d'être exécutées par le processeur µP.

Le codeur COD reçoit en entrée les données DATA à transmettre. Il les code conformément au premier protocole pour obtenir des données codées DATA_NR à transmettre.

Le processeur µP détermine un préambule SIG_NR aux données à transmettre, conforme au premier protocole, dit champ préambule.

Le processeur µP génère un préambule Pre_WiFi conforme au deuxième protocole pour permettre à un récepteur conforme au deuxième protocole d'effectuer une détection de ce préambule Pre_WiFi et de déterminer que le canal est occupé.

Le processeur µP ajoute le champ préambule SIG_NR au préambule Pre_WiFi pour former un nouveau préambule Pre_NR.

Le processeur µP ajoute le nouveau préambule Pre_NR aux données codées DATA_NR fournies par le codeur COD pour former une trame Tr_NR à émettre.

La structure simplifiée d'un équipement selon l'invention conforme à un premier protocole et apte à mettre en œuvre un procédé de réception selon l'invention est illustré par la figure 12. L'équipement NR-U comprend un détecteur DET du champ SIG et du champ préambule SIG_NR, un processeur µP dont le fonctionnement est commandé par l'exécution d'un programme Pg dont les instructions permettent la mise en œuvre d'un procédé de réception selon l'invention, un décodeur DECOD des données codées DATA NR, un décodeur DEC du champ préambule SIG_NR et une mémoire Mem comprenant une mémoire tampon.

A l'initialisation, les instructions de code du programme Pg sont par exemple chargées dans la mémoire tampon Mem avant d'être exécutées par le processeur µP

Le détecteur DET reçoit en entrée la trame reçue Tr_NR par l'équipement NR-U. Le détecteur DET détecte le champ SIG de contenu déterminé par corrélation entre la trame reçue Tr_NR et successivement un des champs SIG fix1, SIG fix2, SIG fix3 à valeurs déterminées mémorisés dans une table. Lorsqu'il y a corrélation, celle-ci intervient avec un des champs SIG fix1, SIG fix2, SIG fix3 de la table mémorisée dans l'équipement NR-U, ce champ est le champ SIG détecté. Chaque champ à valeurs déterminées est mémorisé avec une information de taille de données lenght1, length2, length3 dans un enregistrement de la table. Le champ SIG détecté permet d'identifier l'information de taille length qui est celle contenue dans le même enregistrement que celui du champ SIG détecté.

Le processeur µP estime une durée temporelle COT de la trame reçue Tr_NR correspondant à l'information de taille length de données correspondant au champ SIG détecté.

Le détecteur DET détecte le champ préambule SIG_NR contenu dans la trame reçue Tr_NR.

Le décodeur DEC décode le champ préambule SIG_NR pour déterminer quel décodage à appliquer aux données codées contenues dans la trame reçue. La détermination du décodage permet de configurer un décodeur DECOD et obtenir les données décodées DATA.

En conséquence, l'invention s'applique également à un programme d'ordinateur ou plusieurs, notamment un programme d'ordinateur sur ou dans un support d'informations, adapté à mettre en œuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Exemples de mise en œuvre

Selon un mode de réalisation le premier protocole est conforme aux spécifications d'un réseau d'accès radio NR (5G) définies par le 3GPP et le deuxième protocole est conforme à une norme WiFi .

Un équipement NR-U selon l'invention est compatible d'un réseau d'accès radio NR (5G) et est apte à fonctionner dans une bande non licenciée commune au WiFi. Cet équipement NR-U est apte à mettre en œuvre un procédé d'émission selon l'invention et à mettre en œuvre un procédé de réception selon l'invention.

Le procédé d'émission selon l'invention est tel que la trame Tr_NR générée est formatée selon l'invention. Le préambule Pre_NR de la trame selon l'invention comprend un préambule Pre_WiFi conforme au WiFi et un champ préambule SIG_NR conforme aux spécifications d'un réseau d'accès radio NR (5G). Le champ de données DATA_NR est conforme aux spécifications d'un réseau d'accès radio NR (5G).

Le préambule Pre_WiFi de la trame Tr_NR est conforme à un préambule IEEE 802.11a : il comprend un premier champ STF, un deuxième champ LTF et un troisième champ SIG.

Le premier champ STF permet d'effectuer une détection du préambule, une synchronisation grossière en fréquence et une synchronisation grossière en temps.

Le deuxième champ LTF permet d'effectuer une synchronisation fine en fréquence et une synchronisation fine en temps.

Le troisième champ SIG a un contenu fixé sélectionné dans une table mémorisée et déterminée initialement (off line) pour privilégier la simplicité.

Un exemple d'une telle table est illustré par la figure 13. La table comprend un nombre restreint d'enregistrements, par exemple trois, pour limiter la place occupée et privilégier la simplicité. Le choix de trois enregistrements permet d'approcher une longueur maximale, une longueur moyenne et une longueur minimale d'une trame WiFi : par exemple 5 ms correspondant à 1250 symboles OFDM (la durée d'un symbole OFDM étant de 4µs), 3ms correspondant à 750 symboles OFDM et 1ms correspondant à 250 symboles OFDM.

Selon un mode de réalisation, chaque enregistrement comprend deux champs, un premier champ length1, length2, length3, dont le contenu correspond à une longueur temporelle grossière des champs de la trame qui suivent le champ SIG et un second champ SIG fix1, SIG fix2, SIG fix3 comprenant le contenu du champ SIG correspondant à cette longueur grossière. Le contenu fixe du champ SIG d'un enregistrement est déterminé pour être adapté à la longueur identifiée par le premier champ du même enregistrement.

Le contenu fixe du champ SIG d'un enregistrement est généré notamment avec les contraintes suivantes conformes à celle d'un préambule IEEE 802.11a : la valeur de débit rate est fixée à une valeur minimale, (1101) i.e. 6Mbps, le bit de réserve reserve est positionné à 0, la longueur length est celle qui correspond au premier champ de l'enregistrement, le bit de parité parity est déterminé en fonction de la longueur précédente et les bits de queue tail sont tous positionnés à 0. Le deuxième champ de chaque enregistrement a donc un format conforme à celui du champ SIG d'un préambule IEEE 802.11a et est donc compatible d'une transmission WiFi.

Compte tenu que le champ SIG est uniquement obtenu via une sélection dans une table déterminée mémorisée, un équipement NR-U n'a avantageusement pas besoin de mettre en œuvre de codage canal BCC spécifique du WiFi pour ajouter un préambule Pre_WiFi et construire une trame Tr_NR selon l'invention.

La sélection dans la table du contenu du champ SIG se fait en recherchant la longueur contenue dans le premier champ des différents enregistrements qui donne une durée temporelle supérieure et la plus proche de la durée d'occupation du canal (COT Chanel Occupation Time) qui correspond approximativement à la durée des champs préambule SIG_NR et données DATA_NR (il faut en effet ajouter à la durée de la trame une durée pour des signaux de signalisation pour obtenir le COT). Ceci assure qu'un équipement WiFi n'interfère absolument pas pendant une transmission selon l'invention de la même manière que s'il s'agissait d'une transmission WiFi puisque cet équipement considère que le canal est occupé pendant la durée temporelle associée au champ SIG et que cette durée est au moins supérieure ou égale à la durée réelle de transmission de la trame Tr_NR.

Le champ préambule SIG_NR permet de transmettre des informations spécifiques à un équipement NR-U. Ce champ est codé selon un codage canal spécifique au réseau d'accès radio NR (5G). Ce codage canal est très différent du codage utilisé pour les champs qui suivent un préambule IEEE 802.11a classique, la probabilité de fausse alarme est donc presque nulle. En effet, pour une norme IEEE 802.11a les données sont codées par un codeur BCC et pour les normes IEEE 802.11n, IEEE 802.11ac et IEEE 802.11ax les champs suivant le champ SIG sont également codés par un codeur BCC.

La durée d'occupation du canal (COT Chanel Occupation Time) qui correspond approximativement à la durée associée au champ SIG est donc une valeur grossière destinée à protéger la transmission des données de la coexistence dans la même bande d'équipements WiFi.

L'espacement inter porteuses pour ce champ préambule SIG_NR peut correspondre soit à celui utilisé pour le WiFi (i.e. 312.5kHz) soit à celui spécifique du réseau d'accès NR-U (i.e. 15x2^{u}kHz avec u=0,1,2,3,4). L'équipement NR-U a donc deux horloges, une première correspondant à l'espace inter porteuses du réseau d'accès NR-U (i.e. 1/15x2^{u}kHz avec u=0,1,2,3,4) et une deuxième correspondant à l'espace inter porteuses du WiFi (i.e. 1/312.5kHz).

La figure 14 illustre la structure d'une trame Tr_NR selon deux modes différents. Pour chaque mode, mod1, mod2 les parties hachurées ont le même espace inter porteuses qui est celui utilisé pour le WiFi (i.e. 312.5kHz).

Selon le mode 1, le champ préambule SIG_NR a le même espace inter porteuses que celui utilisé pour le WiFi (i.e. 312.5kHz). Ce mode nécessite que l'équipement NR-U soit apte à effectuer tout codage spécifié pour le réseau d'accès NR-U tout en utilisant un cadencement donné par l'espace inter porteuses du WiFi (i.e. 1/312.5kHz). A cette fin, l'équipement NR-U comprend un calculateur/processeur dont la puissance est dimensionnée pour effectuer au cadencement du WiFi les opérations de codage spécifiées pour le réseau d'accès NR-U.

Selon le mode 2, le champ préambule SIG_NR n'a pas le même espace inter porteuses que celui utilisé pour le WiFi, il a l'espace inter porteuses de celui du réseau d'accès NR-U (i.e. 15x2^{u}kHz avec u=0,1,2,3,4). Pour permettre le basculement du cadencement après le préambule Pre_WiFi et avant le champ préambule SIG_NR, la trame Tr_NR comprend un champ REF_NR de signal de référence. La présence de ce champ permet à l'équipement NR-U selon l'invention d'anticiper son changement d'horloge avant l'arrivée du champ préambule SIG_NR. Ce champ REF_NR permet en outre à l'équipement NR-U selon l'invention d'effectuer la synchronisation avant de pouvoir décoder le champ préambule SIG_NR. Ce champ REF_NR peut donc avoir une composition comparable aux champs STF et LTF d'un préambule WiFi sachant que l'équipement NR-U a déjà obtenu une estimation du canal de transmission à partir du champ LTF du préambule Pre_WiFi. Selon une alternative sa composition peut être comparable à celle d'un champ NR PSS ou NR SSS des premières spécifications NR du standard 5G du 3GPP. Selon les spécifications NR, un champ PSS est généré selon une des trois séquences M possibles et ensuite modulé selon une modulation BPSK. Un champ SSS est généré selon une des 336 séquences M possibles et ensuite modulé selon une modulation BPSK. Ces champs PSS et SSS sont non seulement utilisés pour une synchronisation temporelle et une synchronisation fréquentielle mais en outre pour identifier l'identifiant de la cellule. Pour réduire la complexité, une seule séquence M parmi les trois peut être utilisée pour un champ équivalent au champ PSS pour une synchronisation temporelle, la synchronisation fréquentielle pouvant être obtenue avec le préambule Pre_WiFi.

La structure simplifiée d'un équipement NR-U selon l'invention conforme à un protocole NR et apte à mettre en œuvre un procédé d'émission selon l'invention précédemment décrit est illustré par la figure 11. Le codeur COD reçoit en entrée les données DATA à transmettre. Il les code conformément au protocole NR pour obtenir des données codées DATA_NR à transmettre.

Le processeur µP détermine un préambule SIG_NR aux données à transmettre, conforme au protocole NR, dit champ préambule.

Le processeur µP génère un préambule Pre_WiFi conforme au protocole WiFi pour permettre à un récepteur conforme au protocole WiFi d'effectuer une détection de ce préambule Pre_WiFi et de déterminer que le canal est occupé.

Le processeur µP ajoute le champ préambule SIG_NR au préambule Pre_WiFi pour former un nouveau préambule Pre_NR.

Le processeur µP ajoute le nouveau préambule Pre_NR aux données codées DATA_NR fournies par le codeur COD pour former une trame Tr_NR à émettre.

La machine d'état d'un équipement WiFi recevant une trame émise selon l'invention est illustrée par la figure 15. Tout équipement WiFi qui reçoit *Start-of-packet* une trame générée selon l'invention peut reconnaître le préambule Pre_WiFi, sélectionner son seuil CCA à -82dBm *Thresh=-82dBm* et confirmer cette sélection si *SIG valide* le décodage du champ SIG du préambule Pre_WiFi conduit à une sortie du décodeur sans erreur. L'équipement WiFi extrait du champ SIG correctement décodé le débit *rate* et la longueur *length* des champs qui suivent le champ SIG. Cette longueur donne la durée approximative de l'occupation temporelle du canal (COT, Channel Occuaption Time) par la transmission de la trame. L'équipement WiFi maintient donc son seuil de -82dBm pendant cette durée.

Si la valeur de débit *rate* est compatible du standard WiFi 11a, l'équipement WiFi peut tenter de décoder *process WiFi* les données du champ de données selon les procédures spécifiques à chaque amendements 11a, 11n, 11ac ou 11ax *11a*/*n*/*ac*/*ax.* L'équipement WiFi s'attend à recevoir des données codées BCC après le préambule Pre_WiFi (i.e. juste après le SIG) conformément aux procédures *11a*/*n*/*ac*/*ax.* Or, le champ préambule SIG_NR qui suit le préambule Pre_WiFi est codé selon un autre codage (code polaire ou ldpc). Ainsi, il n'y a pas de confusion possible entre la trame Tr_NR et une trame Tr_WiPi quelconque ; la probabilité de faux positif (i.e. le fait de prendre une trame Tr_NR pour une trame Tr_WiFi, ou inversement) est quasi nulle. Toutefois ceci ne remet pas en cause le seuil positionné à -82dBm et donc la transmission de la trame Tr_NR est bien protégée. La longueur *length* lui donne une indication de la durée temporelle du champ de données ce qui lui permet de stopper son décodage lorsque la durée est écoulée. Si la valeur du débit *rate* n'est pas compatible d'un des standards WiFi, l'équipement ne peut pas décoder les données du champ de données. Il ignore *Ignore content* alors le contenu de la trame reçue.

Si *SIG valide* le décodage du champ SIG du préambule Pre_WiFi conduit à une sortie du décodeur avec erreur alors classiquement l'équipement WiFi positionne son seuil à -62dBm *Thresh=-62dBm.* L'équipement WiFi ignore *Ignore content* alors le contenu de la trame reçue.

Par conséquent, le déploiement d'un réseau d'accès radio NR dans une bande non licenciée commune à un standard WiFi est transparent pour les équipements WiFi si l'émission par un équipement via un réseau d'accès radio NR se fait selon un procédé selon l'invention i.e. en émettant une trame formatée selon l'invention. En effet, compte tenu du format de la trame Tr_NR émise par l'équipement NR-U selon l'invention, l'équipement WiFi reconnaît le préambule, maintient son seuil à -82dBm, reconnait un champ SIG valide, reconnait un débit *rate* valide, il tente alors de décoder les données.

Un équipement NR-U selon l'invention est compatible d'un réseau d'accès radio NR (5G) et est apte à fonctionner dans une bande non licenciée commune au WiFi. La structure simplifiée d'un tel équipement NR-U apte à mettre en œuvre un procédé de réception selon l'invention précédemment décrit est illustrée par la figure 12. La machine d'état correspondante à la réception d'une trame selon l'invention par un équipement NR-U est illustrée par la figure 16. L'équipement NR-U selon l'invention met en œuvre deux seuils à -82dBm et -62dBm et non plus un seul seuil à - 72dBm.

Tout équipement NR-U selon l'invention qui reçoit *Start-of-packet* une trame générée selon l'invention peut reconnaître le préambule Pre_WiFi et positionner son seuil CCA à -82dBm *Thresh=-82dBm.* Lors de la réception d'une trame formatée selon l'invention, l'équipement NR-U n'a avantageusement pas besoin de mettre en œuvre de décodage canal BCC. Il suffit que l'équipement NR-U effectue une corrélation *SIG in list* pour détecter la présence du champ SIG. Cette corrélation est calculée entre le champ SIG reçu et les deuxièmes champs des enregistrements de la table mémorisée par l'équipement pour déterminer s'il y a effectivement une forte corrélation i.e. si le champ SIG reçu correspond à un des deuxièmes champs de la table. Dans ce cas, l'équipement NR-U connait la durée temporelle grossière *COT* des champs dont le champ DATA qui suivent le champ SIG puisque cette durée est donnée par le premier champ de l'enregistrement. Cette longueur donne la durée approximative de l'occupation temporelle du canal par la transmission de la trame. Le nombre restreint d'enregistrements de la table permet de limiter fortement la complexité additionnelle due à la recherche de corrélation entre le champ SIG et les enregistrements de la table.

L'équipement NR-U détecte le champ préambule *SIG_NR.* Si cette détection aboutit, l'équipement peut le décoder et décoder *SIG_NR & process NR* les données du champ de données DATA_NR.

Si la corrélation ne permet pas de reconnaître un champ SIG de la liste *SIG in list* alors l'équipement NR-U positionne son seuil à -62dBm *Thresh=-62dBm* et ignore *Ignore content* le contenu de la trame reçue.

Un mode particulier de réalisation du procédé de réception détaillé précédemment en regard de la figure 16, est illustré par la figure 17. Selon ce mode de réalisation, l'équipement NR-U selon l'invention effectue en outre une vérification *SIG in BPSK* pour réduire la probabilité de fausse alarme liée à une non détection du champ SIG. Il y a une fausse alarme si le champ SIG est présent dans la trame émise selon l'invention et que la corrélation effectuée par l'équipement NR-U ne permet pas de déterminer un enregistrement corrélé.

Selon ce mode, si l'équipement NR-U ne trouve pas d'enregistrement dans la table qui soit corrélé lors du test *SIG in list* alors il teste *SIG in BPSK* si le signal correspondant au champ SIG émis peut correspondre à un champ SIG d'un préambule WiFi. Pour mener à bien ce test, l'équipement NR-U effectue une transformation temps fréquence telle qu'une FFT à N points de ce signal reçu et obtient un signal fréquentiel complexe à N sous-porteuses. Il compare la puissance moyenne de la partie réelle de ce signal complexe avec celle de la partie imaginaire et ce pour l'ensemble des N sous-porteuses. En effet, la modulation BPSK module en +1/-1 et donc même si une partie imaginaire a été introduite par du bruit alors la moyenne permet de différencier cette modulation d'autres types de modulation tels que QPSK, xQAM, etc. Ainsi si la puissance moyenne de la partie réelle moins celle de la partie imaginaire est supérieure à un seuil déterminé, le récepteur de l'équipement NR-U considère que des symboles modulés selon une modulation BPSK sont reçus et ont donc été transmis. Si tel est le cas, l'équipement NR-U ignore *Ignore content* le contenu reçu. Si tel n'est pas le cas, l'équipement NR-U positionne son seuil à -62dBm *Thresh=-62dBm* i.e. il a reçu de l'énergie mais qui ne correspond pas à une transmission WiFi et l'équipement NR-U ignore *Ignore content* le contenu reçu.

## Revendications

1. Procédé (1) d'émission de données par un terminal mobile vers une station de base d'un réseau d'accès mobile conforme à un premier protocole, l'émission intervenant dans une bande de fréquence partagée avec un réseau de transmission sans fil conforme à un deuxième protocole, ledit procédé comprenant :
- coder (2) les données à transmettre conformément au premier protocole pour obtenir des données codées (DATA_NR),
- déterminer (3) un préambule conforme au premier protocole dit champ préambule (SIG_NR),
- générer (4) un préambule (Pre_WiFi) conforme au deuxième protocole et comprenant un champ de contenu déterminé,
- ajouter (5) le champ préambule (SIG_NR) au préambule (Pre_WiFi) conforme au deuxième protocole pour former un nouveau préambule (Pre_NR),
- ajouter (6) le nouveau préambule (Pre_NR) aux données codées (DATA_NR) pour former une trame (Tr_NR) à émettre,
et dans lequel le contenu du champ compris dans le préambule conforme au deuxième protocole est déterminé par sélection d'un champ à contenu fixe parmi plusieurs champs d'une table déterminée mémorisée par ledit terminal mobile, ladite sélection étant adressée par un nombre en correspondance avec une durée temporelle de ladite trame, ledit champ ayant un format conforme à celui d'un champ correspondant d'un préambule selon le deuxième protocole et étant compatible d'une transmission sur le réseau de transmission sans fil.

2. Procédé (1) d'émission de données selon la revendication précédente tel que le préambule conforme au deuxième protocole comprend un premier champ, un deuxième champ et un troisième champ correspondant audit champ de contenu déterminé, le premier champ permettant d'effectuer une détection du préambule, une synchronisation grossière en fréquence et une synchronisation grossière en temps, et le deuxième champ permettant d'effectuer une synchronisation fine en fréquence et une synchronisation fine en temps.

3. Procédé (1) d'émission de données selon l'une des revendications précédentes, tel que le préambule (Pre_WiFi) et le champ préambule (SIG_NR) sont générés avec une même cadence d'horloge.

4. Procédé (1) d'émission de données selon l'une des revendications 1 à 3, tel que le préambule (Pre_WiFi) conforme au deuxième protocole et le champ préambule (SIG_NR) sont générés avec des cadences d'horloge différentes.

5. Procédé (1) d'émission de données selon l'une des revendications 1 à 4 tel que le premier protocole est un protocole de télécommunication mobile et le deuxième protocole est conforme à une norme WiFi.

6. Procédé (11) de réception de trames de données par un terminal mobile conforme à un premier protocole , apte à communiquer via un réseau d'accès mobile conforme audit premier protocole, la réception intervenant dans une bande de fréquence partagée avec un réseau de transmission sans fil conforme à un deuxième protocole, une trame (Tr_NR) reçue comprenant un nouveau préambule (Pre_NR) et des données codées (DATA_NR) conformément au premier protocole (NR), le nouveau préambule (Pre_NR) comprenant un préambule (Pre_WiFi) conforme à un deuxième protocole et un champ préambule (SIG_NR) conforme au premier protocole, le préambule (Pre _WiFi) conforme au deuxième protocole comprenant un champ (SIG) de contenu déterminé, le procédé comprenant :
- détecter (12) le champ de contenu déterminé par comparaison avec un des champs (SIG fix1, SIG fix2, SIG fix3) à contenu déterminé mémorisés dans une table, chaque champ à contenu déterminé étant mémorisé avec une information de taille de données (lenght1, length2, length3),
- estimer (12) une durée temporelle (COT) de la trame reçue (Tr_NR) correspondant à l'information de taille (length) de données correspondant au champ détecté,
- détecter (13) et décoder (13) le champ préambule (SIG_NR) pour déterminer un décodage des données codées.

7. Procédé (11) de réception de trames de données selon la revendication précédente comprenant en outre :
- sur reconnaissance du préambule (Pre_WiFi) conforme au deuxième protocole, positionner un seuil d'énergie reçue à une première valeur et sinon positionner le seuil à une seconde valeur supérieure à la première pour statuer sur l'état du canal.

8. Procédé (11) de réception de trames de données selon l'une des revendications 6 et 7 tel que le premier protocole est un protocole de télécommunication mobile et le deuxième protocole est conforme à une norme WiFi.

9. Terminal mobile (NR-U) conforme à un premier protocole, apte à communiquer via un réseau d'accès mobile conforme au premier protocole et apte à émettre dans une bande de fréquence partagée avec un réseau de transmission sans fil conforme à un deuxième protocole, le terminal comprenant :
- un codeur (COD) pour coder des données conformément au premier protocole et obtenir des données codées (DATA_NR),
- un processeur (µP) pour générer un préambule dit champ préambule (SIG_NR) conforme au premier protocole,
- un processeur (µP) pour générer un préambule (Pre_WiFi) conforme au deuxième protocole et comprenant un champ de contenu déterminé par sélection d'un champ à contenu fixe parmi plusieurs champs d'une table déterminée mémorisée par ledit terminal mobile, ladite sélection étant adressée par un nombre en correspondance avec une durée temporelle d'une trame à émettre, ledit champ ayant un format conforme à celui d'un champ correspondant d'un préambule selon le deuxième protocole et étant compatible d'une transmission sur le réseau de transmission sans fil ; - un processeur (µP) pour ajouter le champ (SIG_NR) préambule au préambule (Pre_WiFi) pour former un nouveau préambule (Pre_NR),
- un processeur (µP) pour ajouter le nouveau préambule (Pre_NR) aux données codées (DATA_NR) et former ladite trame (Tr_NR) à émettre.

10. Terminal mobile (NR-U) apte à communiquer via un réseau d'accès mobile conforme à un premier protocole et apte à recevoir des trames (Tr_NR) dans une bande de fréquence partagée avec un réseau de transmission sans fil conforme à un deuxième protocole, une trame (Tr_NR) reçue comprenant un nouveau préambule (Pre_NR) et des données codées (DATA_NR) conformément au premier protocole, le nouveau préambule (Pre_NR) comprenant un préambule (Pre _WiFi) conforme au deuxième protocole et un champ préambule (SIG_NR) conforme au premier protocole, le préambule (Pre_WiFi) conforme au deuxième protocole comprenant un champ de contenu déterminé, le terminal comprenant :
- un détecteur (DET) du champ de contenu déterminé par comparaison entre la trame reçue (Tr_NR) et successivement un des champs (SIG fix1, SIG fix2, SIG fix3) à contenu déterminé mémorisés dans une table, chaque champ à contenu déterminé étant mémorisé avec une information de taille de données (lenght1, length2, length3),
- un processeur (µP) pour estimer une durée temporelle (COT) de la trame reçue (Tr_NR) correspondant à l'information de taille (length) de données correspondant au champ détecté,
- un détecteur (DET) du champ préambule (SIG_NR),
- un décodeur (DEC) du champ préambule (SIG_NR) pour déterminer un décodage des données codées (DATA NR),
- un décodeur (DECOD) des données codées (DATA NR).

11. Terminal mobile selon l'une des revendications 9 et 10 tel que le premier protocole est un protocole de télécommunication mobile et le deuxième protocole est conforme à une norme WiFi.

12. Signal numérique émis ou reçu contenant une trame comprenant un nouveau préambule (Pre_NR) et des données codées (DATA _NR) conformément à un premier protocole, le nouveau préambule (Pre_NR) comprenant un préambule (Pre_WiFi) conforme à un deuxième protocole et un champ préambule (SIG_NR) conforme au premier protocole, le préambule (Pre _WiFi) conforme au deuxième protocole comprenant un champ de contenu déterminé par sélection d'un champ à contenu fixe parmi plusieurs champs d'une table déterminée mémorisée par un équipement selon le premier protocole, apte à communiquer via un réseau d'accès mobile conforme audit premier protocole, ladite sélection étant adressée par un nombre en correspondance avec une durée temporelle d'une trame à émettre, ledit champ ayant un format conforme à celui d'un champ correspondant d'un préambule selon le deuxième protocole et étant compatible d'une transmission sur le réseau de transmission sans fil.

13. Signal numérique émis ou reçu selon la revendication 12 tel que le premier protocole est un protocole de télécommunication mobile et le deuxième protocole est conforme à une norme WiFi.

14. Programme d'ordinateur sur un support d'informations, ledit programme comportant des instructions de programme adaptées à la mise en œuvre d'un procédé selon l'une quelconque des revendications 1 à 8 lorsque ledit programme est chargé et exécuté dans un terminal mobile.

15. Support d'informations comportant des instructions de programme adaptées à la mise en œuvre d'un procédé selon l'une quelconque des revendications 1 à 8, lorsque ledit programme est chargé et exécuté dans un terminal mobile.

## Patentansprüche

1. Verfahren (1) zum Senden von Daten durch ein mobiles Endgerät zu einer Basisstation eines Mobilzugangsnetzwerks gemäß einem ersten Protokoll, wobei das Senden in einem Frequenzband erfolgt, das mit einem drahtlosen Übertragungsnetzwerk gemäß einem zweiten Protokoll geteilt wird, das Verfahren umfassend:
- Codieren (2) der zu übertragenden Daten gemäß dem ersten Protokoll, um codierte Daten (DATA_NR) zu erhalten,
- Bestimmen (3) einer Präambel gemäß dem ersten Protokoll, Präambelfeld (SIG_NR) genannt,
- Erzeugen (4) einer Präambel (Pre_WiFi) gemäß dem zweiten Protokoll, die ein bestimmtes Inhaltsfeld umfasst,
- Hinzufügen (5) des Präambelfelds (SIG_NR) zu der Präambel (Pre_WiFi) gemäß dem zweiten Protokoll, um eine neue Präambel (Pre_NR) zu bilden,
- Hinzufügen (6) der neuen Präambel (Pre_NR) zu den codierten Daten (DATA_NR), um einen zu sendenden Rahmen (Tr_NR) zu bilden,
und wobei der Inhalt des Feldes, das in der Präambel gemäß dem zweiten Protokoll enthalten ist, durch Auswahl eines Feldes mit festem Inhalt aus mehreren Feldern einer bestimmten Tabelle bestimmt wird, die von dem mobilen Endgerät gespeichert wird, wobei die Auswahl durch eine Zahl adressiert wird, die einer Zeitdauer des Rahmens entspricht, wobei das Feld ein Format gemäß dem eines entsprechenden Feldes einer Präambel nach dem zweiten Protokoll aufweist und mit einer Übertragung über das drahtlose Übertragungsnetzwerk kompatibel ist.

2. Verfahren (1) zum Senden von Daten nach dem vorhergehenden Anspruch, wobei die Präambel gemäß dem zweiten Protokoll ein erstes Feld, ein zweites Feld und ein drittes Feld umfasst, das dem bestimmten Inhaltsfeld entspricht, wobei das erste Feld es ermöglicht, eine Detektion der Präambel, eine Frequenzgrobsynchronisation und eine Zeitgrobsynchronisation durchzuführen, und wobei das zweite Feld es ermöglicht eine Frequenzfeinsynchronisation und eine Zeitfeinsynchronisation durchzuführen.

3. Verfahren (1) zum Senden von Daten nach einem der vorhergehenden Ansprüche, wobei die Präambel (Pre_WiFi) und das Präambelfeld (SIG_NR) mit der gleichen Taktrate erzeugt werden.

4. Verfahren (1) zum Senden von Daten nach einem der Ansprüche 1 bis 3, wobei die Präambel (Pre_WiFi) gemäß dem zweiten Protokoll und das Präambelfeld (SIG_NR) mit unterschiedlichen Taktraten erzeugt werden.

5. Verfahren (1) zum Senden von Daten nach einem der Ansprüche 1 bis 4, wobei das erste Protokoll ein Mobiltelekommunikationsprotokoll ist und das zweite Protokoll einem WiFi-Standard entspricht.

6. Verfahren (11) zum Empfangen von Datenrahmen durch ein mobiles Endgerät gemäß einem ersten Protokoll, das in der Lage ist, über ein Mobilzugangsnetzwerk gemäß dem ersten Protokoll zu kommunizieren, wobei das Empfangen in einem Frequenzband erfolgt, das mit einem drahtlosen Übertragungsnetzwerk gemäß einem zweiten Protokoll geteilt wird, wobei ein empfangener Rahmen (Tr_NR) eine neue Präambel (Pre_NR) und gemäß dem ersten Protokoll (NR) codierte Daten (DATA_NR) umfasst, wobei die neue Präambel (Pre_NR) eine Präambel (Pre_WiFi) gemäß einem zweiten Protokoll und ein Präambelfeld (SIG_NR) gemäß dem ersten Protokoll umfasst, wobei die Präambel (Pre_WiFi) gemäß dem zweiten Protokoll ein bestimmtes Inhaltsfeld (SIG) umfasst, das Verfahren umfassend:
- Detektieren (12) des bestimmten Inhaltsfelds durch Vergleichen mit einem der Felder (SIG fix1, SIG fix2, SIG fix3) mit bestimmtem Inhalt, die in einer Tabelle gespeichert sind, wobei jedes Feld mit bestimmtem Inhalt mit einer Datengrößeninformationen (lenght1, length2, length3) gespeichert ist,
- Schätzen (12) einer Zeitdauer (COT) des empfangenen Rahmens (Tr_NR), die der Datengrößeninformation (length) entspricht, die dem detektierten Feld entspricht,
- Detektieren (13) und Decodieren (13) des Präambelfelds (SIG_NR), um eine Decodierung der codierten Daten zu bestimmen.

7. Verfahren (11) zum Empfangen von Datenrahmen nach dem vorhergehenden Anspruch, umfassend ferner:
- bei Erkennung der Präambel (Pre_WiFi) gemäß dem zweiten Protokoll, Positionieren eines Schwellenwerts empfangener Energie auf einen ersten Wert und ansonsten Positionieren des Schwellenwerts auf einen zweiten Wert, der größer als der erste ist, um über den Zustand des Kanals zu entscheiden.

8. Verfahren (11) zum Empfangen von Datenrahmen nach einem der Ansprüche 6 und 7, wobei das erste Protokoll ein Mobiltelekommunikationsprotokoll ist und das zweite Protokoll einem WiFi-Standard entspricht.

9. Mobiles Endgerät (NR-U) gemäß einem ersten Protokoll, das in der Lage ist, über ein Mobilzugangsnetzwerk gemäß dem ersten Protokoll zu kommunizieren, und in der Lage ist, in einem Frequenzband zu senden, das mit einem drahtlosen Übertragungsnetzwerk gemäß einem zweiten Protokoll geteilt wird, das Endgerät umfassend:
- einen Codierer (COD), um Daten gemäß dem ersten Protokoll zu codieren und codierte Daten (DATA_NR) zu erhalten,
- einen Prozessor (µP), um eine Präambel, Präambelfeld (SIG_NR) genannt, gemäß dem ersten Protokoll zu erzeugen,
- einen Prozessor (µP), um eine Präambel (Pre_WiFi) gemäß dem zweiten Protokoll zu erzeugen, die ein Inhaltsfeld umfasst, das durch Auswahl eines Feldes mit festem Inhalt aus mehreren Feldern einer Tabelle bestimmt wird, die von dem Mobilen Endgerät gespeichert wird, wobei die Auswahl durch eine Zahl adressiert wird, die einer Zeitdauer eines zu sendenden Rahmens entspricht, wobei das Feld ein Format gemäß dem eines entsprechenden Feldes einer Präambel gemäß dem zweiten Protokoll aufweist und mit einer Übertragung über das drahtlose Übertragungsnetzwerk kompatibel ist; - einen Prozessor (µP), um das Präambelfeld (SIG_NR) zu der Präambel (Pre_WiFi) hinzuzufügen, um eine neue Präambel (Pre_NR) zu bilden,
- einen Prozessor (µP), um die neue Präambel (Pre_NR) zu den codierten Daten (DATA_NR) hinzuzufügen und den zu sendenden Rahmen (Tr_NR) zu bilden.

10. Mobiles Endgerät (NR-U), das in der Lage ist, über ein Mobilzugangsnetzwerk gemäß einem ersten Protokoll zu kommunizieren, und in der Lage ist, Rahmen (Tr_NR) in einem Frequenzband zu empfangen, das mit einem drahtlosen Übertragungsnetzwerk gemäß einem zweiten Protokoll geteilt wird, wobei ein empfangener Rahmen (Tr_NR) eine neue Präambel (Pre_NR) und gemäß dem ersten Protokoll codierte Daten (DATA_NR) umfasst, wobei die neue Präambel (Pre_NR) eine Präambel (Pre_WiFi) gemäß dem zweiten Protokoll und ein Präambelfeld (SIG_NR) gemäß dem ersten Protokoll umfasst, wobei die Präambel (Pre_WiFi) gemäß dem zweiten Protokoll ein bestimmtes Inhaltsfeld umfasst, das Endgerät umfassend:
- einen Detektor (DET) für das Inhaltsfeld, das durch Vergleichen zwischen dem empfangenen Rahmen (Tr_NR) und nacheinander einem der Felder (SIG fix1, SIG fix2, SIG fix3) mit bestimmtem Inhalt bestimmt wird, die in einer Tabelle gespeichert sind, wobei jedes Feld mit bestimmtem Inhalt mit einer Datengrößeninformationen (lenght1, length2, length3) gespeichert wird,
- einen Prozessor (µP), um eine Zeitdauer (COT) des empfangenen Rahmens (Tr_NR) zu schätzen, die der Datengrößeninformation (length) entspricht, die dem detektierten Feld entspricht,
- einen Detektor (DET) für das Präambelfeld (SIG_NR),
- einen Decodierer (DEC) für das Präambelfeld (SIG_NR), um eine Decodierung der codierten Daten (DATA NR) zu bestimmen,
- einen Decoder (DECOD) für die codierten Daten (DATA NR).

11. Mobiles Endgerät nach einem der Ansprüche 9 und 10, wobei das erste Protokoll ein Mobiltelekommunikationsprotokoll ist und das zweite Protokoll einem WiFi-Standard entspricht.

12. Gesendetes oder empfangenes digitales Signal, das einen Rahmen enthält, der eine neue Präambel (Pre_NR) und gemäß einem ersten Protokoll codierte Daten (DATA_NR) umfasst, wobei die neue Präambel (Pre_NR) eine Präambel (Pre_WiFi) gemäß einem zweiten Protokoll und ein Präambelfeld (SIG_NR) gemäß dem ersten Protokoll umfasst, wobei die Präambel (Pre_WiFi) gemäß dem zweiten Protokoll ein Inhaltsfeld umfasst, das durch Auswahl eines Feldes mit festem Inhalt aus mehreren Feldern einer bestimmten Tabelle bestimmt wird, die von einem Gerät gemäß dem ersten Protokoll gespeichert wird, das in der Lage ist, über ein Mobilzugangsnetzwerk gemäß dem ersten Protokoll zu kommunizieren, wobei die Auswahl durch eine Zahl adressiert wird, die einer Zeitdauer eines zu sendenden Rahmens entspricht, wobei das Feld ein Format gemäß dem eines entsprechenden Feldes einer Präambel gemäß dem zweiten Protokoll aufweist und mit einer Übertragung über das drahtlose Übertragungsnetzwerk kompatibel ist

13. Gesendetes oder empfangenes digitales Signal nach Anspruch 12, wobei das erste Protokoll ein Mobiltelekommunikationsprotokoll ist und das zweite Protokoll einem WiFi-Standard entspricht.

14. Computerprogramm auf einem Informationsmedium, wobei das Programm Programmanweisungen enthält, die dazu ausgelegt sind, ein Verfahren nach einem der Ansprüche 1 bis 8 durchzuführen, wenn das Programm in einem mobilen Endgerät geladen und ausgeführt wird.

15. Informationsmedium, das Programmanweisungen enthält, die dazu ausgelegt sind, ein Verfahren nach einem der Ansprüche 1 bis 8 durchzuführen, wenn das Programm in einem mobilen Endgerät geladen und ausgeführt wird.

## Claims

1. Method (1) for the transmission of data by a mobile terminal to a base station of a mobile access network conforming to a first protocol, the transmission taking place in a frequency band shared with a wireless transmission network conforming to a second protocol, said method comprising:
- encoding (2) the data to be transmitted in accordance with the first protocol so as to obtain encoded data (DATA_NR),
- determining (3) a preamble conforming to the first protocol, called preamble field (SIG_NR),
- generating (4) a preamble (Pre_WiFi) conforming to the second protocol and comprising a field of determined content,
- adding (5) the preamble field (SIG_NR) to the preamble (Pre_WiFi) conforming to the second protocol so as to form a new preamble (Pre_NR),
- adding (6) the new preamble (Pre_NR) to the encoded data (DATA_NR) so as to form a frame (Tr_NR) to be transmitted,
and wherein the content of the field comprised in the preamble conforming to the second protocol is determined by selection of a field with fixed content from among a plurality of fields in a determined table stored by said mobile terminal, said selection being addressed by a number in relation with a temporal duration of said frame, said field having a format conforming to that of a corresponding field of a preamble according to the second protocol and being compatible with transmission over the wireless transmission network.

2. Method (1) for the transmission of data according to the preceding claim, such that the preamble conforming to the second protocol comprises a first field, a second field and a third field corresponding to said field of determined content, the first field making it possible to detect the preamble, perform a rough frequency synchronization and a rough time synchronization, and the second field making it possible to perform a fine frequency synchronization and a fine time synchronization.

3. Method (1) for the transmission of data according to one of the preceding claims, such that the preamble (Pre_WiFi) and the preamble field (SIG_NR) are generated with one and the same clock rate.

4. Method (1) for the transmission of data according to one of Claims 1 to 3, such that the preamble (Pre_WiFi) conforming to the second protocol and the preamble field (SIG_NR) are generated with different clock rates.

5. Method (1) for the transmission of data according to one of Claims 1 to 4, such that the first protocol is a mobile telecommunication protocol and the second protocol conforms to a Wi-Fi standard.

6. Method (11) for the reception of data frames by a mobile terminal conforming to a first protocol, able to communicate via a mobile access network conforming to said first protocol, the reception taking place in a frequency band shared with a wireless transmission network conforming to a second protocol, a received frame (Tr_NR) comprising a new preamble (Pre_NR) and data (DATA_NR) encoded in accordance with the first protocol (NR), the new preamble (Pre_NR) comprising a preamble (Pre_WiFi) conforming to a second protocol and a preamble field (SIG_NR) conforming to the first protocol, the preamble (Pre_WiFi) conforming to the second protocol comprising a field (SIG) of determined content, the method comprising:
- detecting (12) the field of determined content through comparison with one of the fields (SIG fix1, SIG fix2, SIG fix3) with determined content that are stored in a table, each field with determined content being stored with data size information (length1, length2, length3),
- estimating (12) a temporal duration (COT) of the received frame (Tr_NR) corresponding to the data size information (length) corresponding to the detected field,
- detecting (13) and decoding (13) the preamble field (SIG_NR) so as to determine decoding of the encoded data.

7. Method (11) for the reception of data frames according to the preceding claim, furthermore comprising:
- upon recognition of the preamble (Pre_WiFi) conforming to the second protocol, setting a received energy threshold to a first value and otherwise setting the threshold to a second value greater than the first to decide on the state of the channel.

8. Method (11) for the reception of data frames according to one of Claims 6 and 7, such that the first protocol is a mobile telecommunication protocol and the second protocol conforms to a Wi-Fi standard.

9. Mobile terminal (NR-U) conforming to a first protocol, able to communicate via a mobile access network conforming to the first protocol and able to transmit in a frequency band shared with a wireless transmission network conforming to a second protocol, the terminal comprising:
- an encoder (COD) for encoding data in accordance with the first protocol and obtaining encoded data (DATA_NR),
- a processor (µP) for generating a preamble, called preamble field (SIG_NR), conforming to the first protocol,
- a processor (µP) for generating a preamble (Pre_WiFi) conforming to the second protocol and comprising a field of content determined by selection of a field with fixed content from among a plurality of fields in a determined table stored by said mobile terminal, said selection being addressed by a number in relation with a temporal duration of a frame to be transmitted, said field having a format conforming to that of a corresponding field of a preamble according to the second protocol and being compatible with transmission over the wireless transmission network; - a processor (µP) for adding the preamble field (SIG_NR) to the preamble (Pre_WiFi) to form a new preamble (Pre_NR),
- a processor (µP) for adding the new preamble (Pre_NR) to the encoded data (DATA_NR) and forming said frame (Tr_NR) to be transmitted.

10. Mobile terminal (NR-U) able to communicate via a mobile access network conforming to a first protocol and able to receive frames (Tr_NR) in a frequency band shared with a wireless transmission network conforming to a second protocol, a received frame (Tr_NR) comprising a new preamble (Pre_NR) and data (DATA_NR) encoded in accordance with the first protocol, the new preamble (Pre_NR) comprising a preamble (Pre_WiFi) conforming to the second protocol and a preamble field (SIG_NR) conforming to the first protocol, the preamble (Pre_WiFi) conforming to the second protocol comprising a field (SIG) of determined content, the terminal comprising:
- a detector (DET) for detecting the field of determined content through comparison between the received frame (Tr_NR) and, in succession, one of the fields (SIG fix1, SIG fix2, SIG fix3) with determined content that are stored in a table, each field with determined content being stored with data size information (length1, length2, length3),
- a processor (µP) for estimating a temporal duration (COT) of the received frame (Tr_NR) corresponding to the data size information (length) corresponding to the detected field,
- a detector (DET) for detecting the preamble field (SIG_NR),
- a decoder (DEC) for decoding the preamble field (SIG_NR) so as to determine decoding of the encoded data (DATA NR),
- a decoder (DECOD) for decoding the encoded data (DATA NR).

11. Mobile terminal according to one of Claims 9 and 10, such that the first protocol is a mobile telecommunication protocol and the second protocol conforms to a Wi-Fi standard.

12. Transmitted or received digital signal containing a frame comprising a new preamble (Pre_NR) and data (DATA_NR) encoded in accordance with a first protocol, the new preamble (Pre_NR) comprising a preamble (Pre_WiFi) conforming to a second protocol and a preamble field (SIG_NR) conforming to the first protocol, the preamble (Pre_WiFi) conforming to the second protocol comprising a field of content determined by selection of a field with fixed content from among a plurality of fields in a determined table stored by an equipment according to the first protocol, capable of communicating via a mobile access network conforming to said first protocol, said selection being addressed by a number in relation with a temporal duration of a frame to be transmitted, said field having a format conforming to that of a corresponding field of a preamble according to the second protocol and being compatible with transmission over the wireless transmission network.

13. Transmitted or received digital signal according to Claim 12, such that the first protocol is a mobile telecommunication protocol and the second protocol conforms to a Wi-Fi standard.

14. Computer program on an information medium, said program comprising program instructions suitable for implementing a method according to any one of Claims 1 to 8 when said program is loaded and executed in a mobile terminal.

15. Information medium comprising program instructions suitable for implementing a method according to any one of Claims 1 to 8 when said program is loaded and executed in a mobile terminal.
